Europäisches Patentamt

European Patent Office

Office européen des brevets

(19)

(11) Numéro de publication : **0 145 535 B1**

(12) **FASCICULE DE BREVET EUROPÉEN**

(45) Date de publication du fascicule du brevet :
23.12.87

(51) Int. Cl.⁴ : **F 16 D 65/56**

(21) Numéro de dépôt : 84402141.0

(22) Date de dépôt : 24.10.84

(54) **Moteur de frein à réglage automatique.**

(30) Priorité : 28.10.83 FR 8317300

(43) Date de publication de la demande :
19.06.85 Bulletin 85/25

(45) Mention de la délivrance du brevet :
23.12.87 Bulletin 87/52

(84) Etats contractants désignés :
**DE FR GB IT NL SE**

(56) Documents cités :
EP-A- 0 125 487
DE-A- 2 724 129
DE-A- 2 835 305
FR-A- 2 150 082
FR-A- 2 358 590

(73) Titulaire : **BENDIX France**
**126, rue de Stalingrad**
**F-93700 Drancy (FR)**

(72) Inventeur : **Pressaco, Pierre**
**45, rue Emile Zola Bâtiment C**
**F-93120 La Courneuve (FR)**
Inventeur : **Sauvée, Jean-Paul**
**76, Boulevard Félix Faure**
**F-93300 Aubervilliers (FR)**

(74) Mandataire : **Poidatz, Emmanuel et al**
**Service Brevets Bendix 44 rue François 1er**
**F-75008 Paris (FR)**

**Description**

L'invention se rapporte à un moteur de frein susceptible de mettre en œuvre un frein notamment destiné à équiper un véhicule automobile.

L'invention concerne en particulier un moteur de frein à réglage automatique destiné à compenser automatiquement l'usure des garnitures de friction afin de maintenir la course de la pédale de frein et de la commande mécanique si le frein en est équipé nécessaire à la mise en œuvre de ce dernier à un niveau sensiblement constant et faible.

On connaît de nombreux moteurs de frein équipés de dispositif à réglage automatique, par exemple celui décrit dans la demande de brevet français publiée sous le numéro FR-A-2 358 590. Dans ce moteur de frein, il est prévu une broche mobile axialement susceptible de se dégager d'une rainure oblique si l'effort axial sur le piston excède une valeur prédéterminée. Ce dispositif entend résoudre le problème de la détérioration du réglage automatique si celui-ci n'est pas capable d'assurer le réglage du fait d'une force axiale excessive sur le piston. Ce dispositif bien que simple présente néanmoins un inconvénient majeur, à savoir la position orthogonale de la broche mobile. En effet, lorsque la broche mobile doit échapper de la rainure oblique, elle est sollicitée perpendiculairement à son coulissement d'échappement, son guidage doit être parfait et lubrifié sinon le frottement de la broche et de son guidage peut empêcher la broche d'échapper à la rainure et le dispositif de réglage automatique sera détérioré par la force importante à laquelle il sera soumis par le piston principal. De plus, si la broche, ayant fonctionné correctement, du fait de l'amplitude des mouvements, échappe à la rainure oblique, le réglage automatique cesse de fonctionner jusqu'à ce que la broche revienne éventuellement coopérer avec ladite rainure.

L'invention propose un moteur de frein à réglage automatique de construction simple et fiable, ne nécessitant aucun réglage et ne comportant pas les inconvénients mentionnés ci-dessus.

Dans ce but, l'invention propose un moteur de frein à réglage automatique du type comportant un mécanisme d'actionnement à vis écrou dont l'allongement est commandé par un système combiné à vis écrou à pas réversible et embrayage unidirectionnel sensible au déplacement axial relatif entre un piston de commande et un corps fixe recevant ledit piston de commande, caractérisé en ce que l'embrayage unidirectionnel comporte un dispositif automatique de mise hors-service momentané commandé axialement par l'embrayage unidirectionnel lorsque le couple de mise en rotation dudit mécanisme à vis-écrou excède une valeur prédéterminée, le dispositif automatique de mise hors-service comportant deux surfaces en vis-à-vis, normalement sollicitées en contact de friction l'une contre l'autre, l'une de ces surfaces étant solidaire du corps, l'autre de ces surfaces étant solidaire du corps, l'autre de ces surfaces étant solidaire dudit embrayage unidirectionnel.

Avec un tel agencement, l'ensemble du dispositif de rattrapage automatique est considérablement simplifié, sa fiabilité étant accrue du fait que la mise hors-service du réglage est commandée axialement lorsque le réglage automatique a des difficultés de fonctionnnement du fait de la force appliquée sur le moteur de frein, les risques de surréglage, en particulier dans le cas de freins à disques, étant réduits.

La demande de brevet européen N° 841 039 860, publiée le 21 Novembre 1984 sous le numéro EP-A-0 125 487 et bénéficiant de la priorité du 4 Avril 1983 concerne un moteur de frein à réglage automatique correspondant au préambule de la présente revendication 1, qui comporte un dispositif automatique de mise hors-service de l'embrayage semblable à celui selon la présente invention.

On décrira maintenant à titre d'exemple non limitatif trois modes de réalisation de l'invention en se référant aux dessins annexés dans lesquels :

— la figure 1 est une vue en coupe partielle d'un moteur de frein réalisé conformément à l'invention selon un premier mode de réalisation et appliqué à la commande d'un frein à tambour ;

— la figure 2 est une coupe selon la ligne 2-2 de la figure 1 ;

— la figure 3 est une vue en coupe d'un moteur de frein réalisé conformément à l'invention selon un second mode de réalisation et appliqué à la commande d'un frein à disque ;

— la figure 4 est une vue en coupe selon la ligne 4-4 de la figure 3 ; et

— la figure 5 est une vue en coupe d'un moteur de frein conformément à l'invention selon un troisième mode de réalisation et également appliqué à la commande d'un frein à disque.

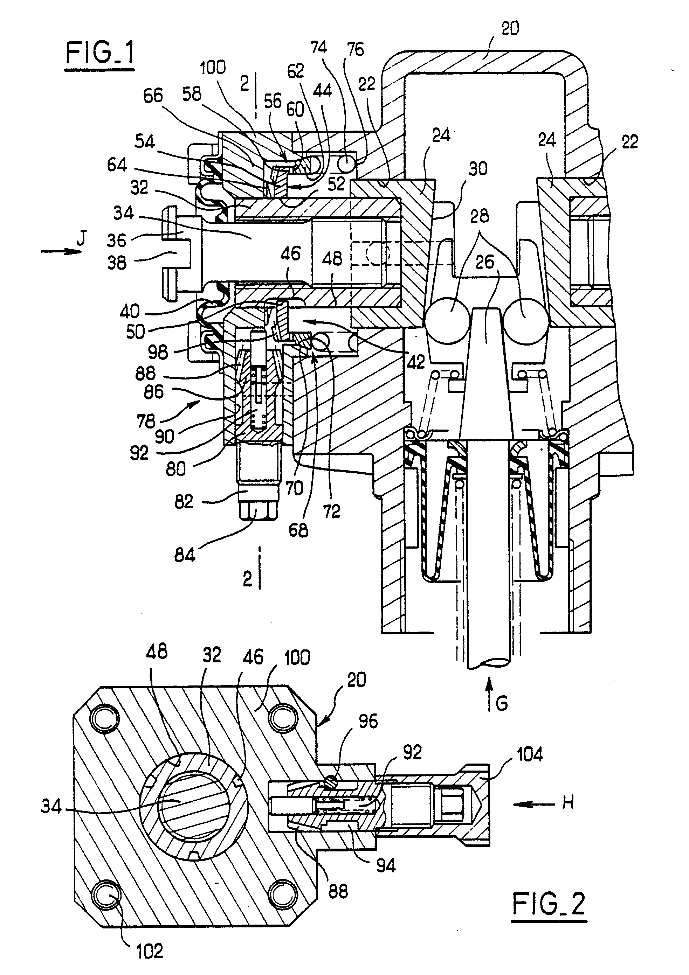

Le moteur de frein représenté sur la figure 1 est du type à commande à coin selon un agencement utilisé en particulier dans les freins à tambour. Ce moteur de frein comporte, d'une façon conventionnelle, un corps 20 comportant deux alésages 22 dans lesquels sont montés des pistons 24 susceptibles d'être écartés l'un de l'autre au moyen d'un coin 26 et de galets 28 agissant sur les fonds inclinés 30 des pistons 24 lorsque le coin 26 est déplacé dans le sens de la flèche G de la figure 1. Les pistons 24, par l'intermédiaire d'écrous 32 et de vis 34, chaque paire d'écrou 32 et de vis 34 formant un système à vis-écrou, sont susceptibles d'écarter les segments du frein à tambour (non représentés) mettant ainsi le frein en œuvre. D'une façon conventionnelle, l'extrémité 36 de la vis 34 comporte une fente 38 empêchant la rotation de la vis par rapport au segment lors du fonctionnement du frein. Egalement d'une façon conventionnelle, l'extrémité du moteur de frein est équipée d'un dispositif de protection 40 placé entre le corps 20 du moteur de frein et la vis 34, de manière à protéger l'intérieur du moteur de frein.

Conformément à l'invention, le moteur de frein comporte un dispositif de réglage automatique désigné dans son ensemble par la référence 42. Dans le mode de réalisation de la figure 1, le réglage automatique 42 comporte le mécanisme d'actionnement à vis-écrou 32, 34 commandé par un dispositif à vis-écrou à pas réversible désigné dans son ensemble par la référence 44. Ce dispositif à vis-écrou à pas réversible comporte des gorges hélicoïdales 46 formées sur la périphérie 48 de l'écrou 32, gorges dans lesquelles pénètrent des saillies 50 formées sur un diamètre intérieur 52 d'un anneau de commande 54 coopérant avec le corps 20 au travers d'un embrayage unidirectionnel désigné dans son ensemble par la référence 56 et formé, dans le mode de réalisation représenté, par deux dentures frontales dissymétriques, l'une 58 portée par l'anneau de commande 54, l'autre 60 portée par une pièce annulaire 62 de l'embrayage unidirectionnel 56. Un ressort d'engrènement 64, réalisé sous forme d'anneau élastique dans le mode de réalisation représenté, est placé entre l'anneau de commande 54 et une partie 66 fixe par rapport au corps de manière à normalement presser les dentures 58 et 60 l'une contre l'autre. Le moteur de frein, conformément à l'invention, comporte un dispositif automatique de mise hors-service de l'embrayage unidirectionnel désigné dans son ensemble par la référence 68. Dans le mode de réalisation représenté, ce dispositif 68 comporte deux surfaces tronconiques coaxiales 70 et 72 placées en vis-à-vis, dont l'une 70 est solidaire du corps 20 et l'autre 72 est solidaire de l'embrayage unidirectionnel au travers de la pièce 62 sur la périphérie de laquelle elle est formée. Un ressort 74 est placé entre ladite pièce 62 et une partie fixe 76 solidaire du corps 20 pour normalement presser l'une contre l'autre les deux surfaces tronconiques 70 et 72.

Selon une autre caractéristique de l'invention, le moteur de frein comporte un dispositif de remise à zéro désigné dans son ensemble par la référence 78. Le dispositif de remise à zéro 78 est formé par une tige 80 comportant à une de ses extrémités 82 une tête de manœuvre 84, réalisée sous forme de tête de vis hexagonale dans le mode de réalisation représenté et comportant à son autre extrémité 86 une denture 88. La tige 80 est placée dans un alésage 90 formé dans le corps 20 dans lequel ladite tige est susceptible d'être déplacée axialement dans le sens de la flèche H de la figure 2 à l'encontre d'un dispositif de rappel à ressort 92 formé dans le mode de réalisation par un ressort et un poussoir prenant appui sur le corps 20. La tige 80 comporte une gorge 94 qui coopère avec une goupille 96 pour délimiter les mouvements axiaux de ladite tige 80. L'anneau de commande 54 porte une seconde denture frontale 98 susceptible de coopérer avec la denture 88 du dispositif de remise à zéro 78, lorsque la tige 80 a été déplacée dans la direction de la flèche H de la figure 2.

Comme on le voit sur les figures 1 et 2, le corps 20 comporte une partie amovible 100 fixée au corps 20 au moyen de quatre vis 102, cette partie amovible 100 comportant l'alésage 90 destiné à recevoir le dispositif de remise à zéro 78 et sur laquelle est directement formée la surface tronconique 70 solidaire du corps fixe. En outre, cette partie amovible définit la précontrainte du ressort 74 qui sollicite les deux surfaces tronconiques en engagement de friction l'une contre l'autre.

Le frein qui vient d'être décrit à l'aide des figures 1 et 2, fonctionne de la manière suivante : lorsque le moteur de frein doit être actionné, une poussée est exercée sur le coin 26 dans le sens de la flèche G de la figure 1. Sous l'effet de cette poussée, le coin pénètre entre les deux galets 28 qui roulent, d'une part sur le coin 26 et, d'autre part sur les fonds 30 des pistons 24 et, comme le coin et les fonds 30 sont inclinés, les pistons 24 sont écartés l'un de l'autre de manière à solliciter les segments de frein (non représentés). Le mouvement du piston 24 représenté sur la figure 1 est donc vers la gauche au moment de l'actionnement du frein. Ce mouvement du piston 24 entraîne le mouvement conjoint de l'écrou 32 et de la vis 34, l'écrou 32 étant en appui sur le piston 24. Le mouvement de l'écrou 32 et, plus précisément, le mouvement des rainures hélicoïdales 46 portées par la périphérie 48 de cet écrou, entraîne la rotation de l'anneau de commande 54, les dentures frontales assymétriques 58, 60 de l'embrayage unidirectionnel 56 permettant à l'anneau 54 de tourner par rapport à la pièce 62 en comprimant le ressort d'engrènement 64. Si le mouvement du piston 24 est d'une amplitude telle qu'il n'y a pas eu de décalage entre les deux dentures frontales 58 et 60, au relâchement du frein celles-ci reprennent leur position initiale. Par contre, si l'amplitude du mouvement du piston 24 a été telle que les rainures hélicoïdales 46 ont provoqué une rotation sur l'anneau de commande 54 pour que celui-ci saute une ou plusieurs dents par rapport à la pièce 62, alors au retour, comme l'anneau de commande 54 ne peut tourner du fait des dentures assymétriques de l'embrayage unidirectionnel 56, les saillies 50 de l'anneau de commande imposent un mouvement de rotation à l'écrou 32 au travers des gorges hélicoïdales 46. Comme la vis 34 est immobilisée en rotation par la fente 38 qui coopère avec les segments, la rotation de l'écrou 32 provoque l'allongement du mécanisme vis-écrou 32-36 compensant ainsi l'usure des garnitures de friction portées par les segments. Par contre, si la rotation de l'écrou 32 est empêchée par un effort axial important sur la vis 34 du fait, par exemple, d'un changement brusque de direction de freinage (le cas d'un arrêt sur une pente), alors l'anneau de commande 54 est sollicité en rotation et axialement dans le sens de la flèche J par l'écrou 32 ; l'anneau 54 coopérant avec la pièce 62 sollicite celle-ci en rotation forcée à l'encontre de l'engagement normal de friction, dû au ressort 74, des deux surfaces tronconiques 70 et 72,

permettant la rotation simultanée de l'anneau de commande 54 et de la pièce 62 et ceci sans risque d'endommager ni l'embrayage unidirectionnel, ni le dispositif à vis-écrou à pas réversible formé dans le mode de réalisation représenté par les saillies 50 de l'anneau de commande 54, constituant l'écrou, et les gorges hélicoïdales 46 de l'écrou 32, constituant la vis du dispositif vis-écrou. Lorsque l'effort sur la vis 34 cesse, comme l'anneau de commande et la pièce 62 ont tourné par rapport au corps 20, le dispositif est de nouveau prêt à assurer un réglage lors d'un actionnement ultérieur. Le dispositif n'a emmagasiné aucune énergie au cours de ce fonctionnement.

On voit ainsi que, plus l'effort appliqué sur la vis 34 dans le sens de la flèche J est important, plus la force disponible pour mettre hors-service l'embrayage unidirectionnel est élevée, en particulier, cet effort opposé à l'effort du ressort 74 diminue la valeur de la friction entre les deux surfaces troncôniques, ce qui favorise leur rotation relative.

Lorsque le réglage automatique doit être remis à zéro, par exemple lors des changements des garnitures de friction, il est avantageux de pouvoir procéder à cette remise à zéro avant le démontage du tambour, car il est courant que le bord du tambour soit moins usé que la partie centrale de la piste de frottement, et le démontage du tambour s'avère délicat ou même impossible si l'on ne peut procéder à un retour partiel ou total du système de réglage automatique vers une position rétractée. Grâce à la structure de l'anneau de commande, et à la possibilité de former sur cet anneau une deuxième denture 98, le dispositif de remise à zéro 78 peut faire saillie à travers le support du moteur de frein de façon à pouvoir y accéder avant démontage du tambour. Pour procéder à une remise à zéro totale ou même partielle du réglage automatique, on procède comme suit: après avoir enlevé un éventuel capot de protection 104 comme indiqué sur la figure 2, on pousse la tige 80 à l'encontre du ressort 92, ce qui permet aux dentures 88 et 98 d'engréner l'une sur l'autre. A l'aide d'une clé appropriée, on fait alors tourner la tête de manœuvre 84 qui sollicite en rotation, au travers des dentures 88 et 98, l'anneau de commande 54. Comme cet anneau ne peut tourner librement du fait de l'embrayage unidirectionnel 56, il faudra appliquer un effort sur la tête 84 de manière à forcer les surfaces troncôniques 70 et 72 à tourner l'une par rapport à l'autre ; lorsqu'on a vaincu cet effort de frottement, l'anneau de commande 54, en tournant, entraîne la rotation de l'écrou 32, ce qui permet de revisser la vis 34 à l'intérieur de l'écrou 32 et par conséquent, de réduire la longueur du système de réglage automatique. En relâchant l'effort de poussée sur l'extrémité 82 de la tige 80, grâce au ressort 92, la tige 80 revient en position de repos comme indiqué sur la figure 2 en appui sur la goupille 96. On peut alors procéder sans difficulté au démontage, si nécessaire, du tambour de frein.

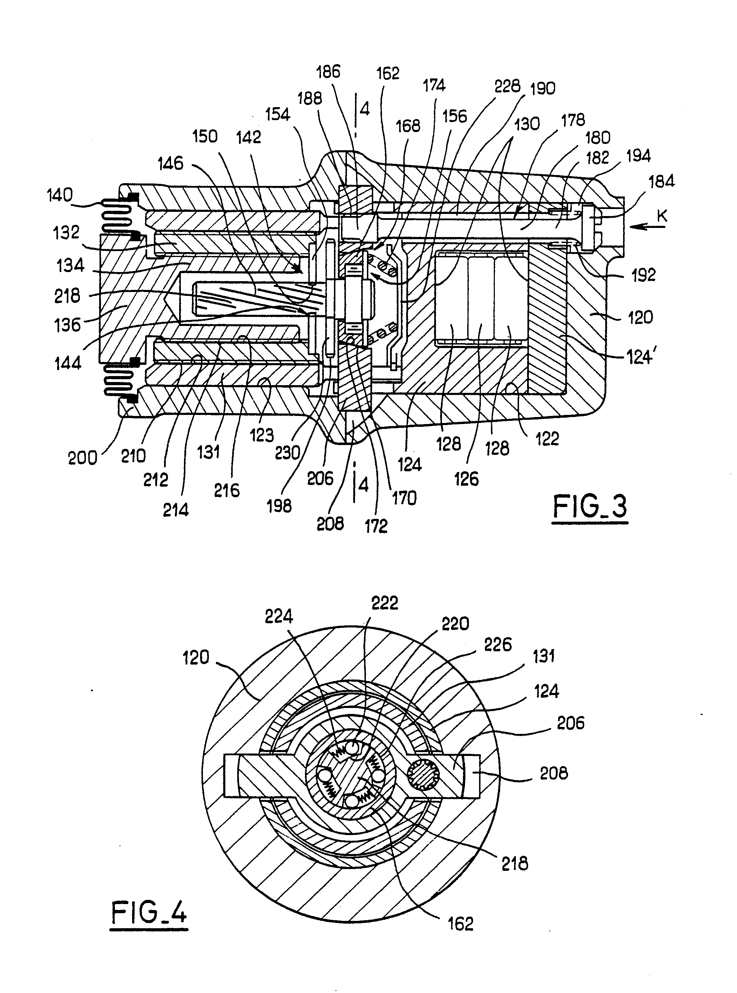

On a représenté sur les figures 3 et 4 un deuxième mode de réalisation appliqué à un moteur de frein pour frein à disque. Dans ce moteur de frein, la mise en œuvre est réalisée au moyen d'un coin 126 sollicitant en écartement deux surfaces obliques 130, au travers de galets 128. L'une des surfaces 130 est formée sur une pièce 124' solidaire du fond du corps 120, l'autre étant formée à l'extrémité d'un piston 124 coulissant dans un alésage 122 formé dans le corps 120. Le piston 124, par l'intermédiaire d'un prolongement 131 d'un écrou 132 et d'une vis 134, terminé par un poussoir 136, est susceptible de déplacer un élément de friction adjacent pour mettre en œuvre le frein à disque. Le prolongement 131, l'écrou 132 et la vis 134 avec son poussoir 136 forment le mécanisme à vis-écrou. Le poussoir 136 est immobilisé d'une façon conventionnelle (non représentée) pour éviter sa rotation par rapport à l'élément de friction lors de la mise en œuvre du moteur de frein. Egalement d'une façon conventionnelle, le moteur de frein est protégé à son extrémité adjacente au poussoir 134 par un dispositif de protection 140. En se reportant à la figure 3, on voit que le corps 120 porte un deuxième alésage 123 dans lequel coulisse le prolongement 131 du piston 124. Le prolongement 131 prend appui sur le piston 124, le prolongement 131 et le piston 124 étant immobilisés en rotation au moyen de deux encoches dans lesquelles pénètre une pièce 206 fixe par rapport au corps. Comme on le voit plus particulièrement sur la figure 4, cette pièce fixe 206 est immobilisée en rotation par rapport au corps au moyen d'un fraisage 208 dans lequel pénètrent deux prolongements de la pièce 206. En se reportant à la figure 3, on voit que le prolongement 131 comporte un filetage intérieur 210 dans lequel se visse l'écrou 132, au moyen d'un filetage extérieur 212. L'écrou 132 porte également un filetage intérieur 214 qui coopère avec un filetage extérieur 216 formé sur la vis 134. Conformément à l'invention, le moteur de frein comporte un dispositif de réglage automatique désigné dans son ensemble par la référence 142. En se reportant à la figure 3, on voit que le mécanisme à vis-écrou 132, 134 est commandé par un dispositif à vis-écrou à pas réversible désigné dans son ensemble par la référence 144. Ce dispositif 144 est formé par une vis 218 qui comporte sur sa périphérie des gorges hélicoïdales 146 dans lesquelles pénètrent des saillies 150 formées sur un diamètre intérieur d'un anneau 154 solidaire de l'écrou 132. La vis 218 et l'anneau de travail 154 forment le dispositif à pas réversible. La vis 218 est couplée au corps 120 au travers d'un embrayage unidirectionnel désigné dans son ensemble par la référence 156. En se référant aux figures 3 et 4, on voit que l'embrayage unidirectionnel est réalisé ici au moyen de surfaces de rampes 220 formées sur la vis 218 et de rouleaux de coincement 222 sollicités par des ressorts 224 en engagement de coincement entre lesdites rampes 220 intérieurement, et, extérieurement une surface cylindrique 226 formée intérieurement sur une pièce annulaire 162 de l'embrayage unidirectionnel 156 entourant la vis 218. En se référant à la figure 4, on voit que, si la vis 218 est sollicitée en rotation dans le sens contraire des aiguilles d'une montre, les rouleaux 222 coinceront entre la surface de rampe 220 et la surface cylindrique 226 et solidariseront les deux pièces 218 et 162. Dans le sens de rotation des aiguilles d'une montre, les rouleaux dégageront à l'encontre des ressorts 224 et permettront la rotation relative de la vis 218 et de la pièce 162. Conformément à l'invention, le moteur de frein comporte un dispositif automatique de mise hors-service 168 de l'embrayage unidirectionnel 156. Comme on le voit sur la figure 3, le dispositif 168 comporte deux surfaces tronconiques coaxiales 170 et 172 placées en vis-à-vis, l'une 170 étant solidaire du corps 120 au travers de la pièce 206, l'autre 172 étant solidaire de la pièce 162 de l'embrayage unidirectionnel, sur laquelle cette surface tronconique est formée. Un ressort 174, placé entre la pièce 162 et une coupelle 228 solidaire du prolongement 131, au moyen par exemple d'un circlips sollicite normalement les deux surfaces tronconiques 170 et 172 en engagement de friction l'une sur l'autre.

Selon une autre caractéristique de l'invention, le moteur de frein comporte un dispositif de remise à zéro 178 du réglage automatique 142. Ce dispositif 178 est formé par une tige 180 dont une extrémité 182 comporte une tête de manœuvre 184 formée dans le mode de réalisation représenté par une tête de vis manœuvrable par un tourne-vis. L'autre extrémité 186 de la tige 180 comporte une denture 188. La tige 180 est placée dans un perçage 190 formé aussi bien dans le piston 124 que dans la pièce 206. La tige 180 est susceptible d'être déplacée dans le sens de la flèche K de la figure 3 à l'encontre du ressort de rappel 192. La tête 184 de la tige 180 est placée dans un chambrage 194 formé dans le corps 120 qui limite la course axiale de la tige 180. La vis 218 porte une pièce annulaire 230 sur laquelle on a formé une denture radiale 198 susceptible de coopérer avec la denture 188 de la tige 180 lorsque celle-ci a été déplacée dans le sens K de la figure 3. Comme on le voit sur la figure 3, le corps 120 comporte une portion amovible 200 fixée au corps 120, par exemple par des liaisons filetées, ce qui permet d'enfermer et d'immobiliser la pièce 206 entre les deux parties du corps 120 en y enfermant également le dispositif de remise à zéro et le piston 124.

Le frein qui vient d'être décrit à l'aide des figures 3 et 4 fonctionne de la manière suivante : lorsque l'on veut mettre en œuvre le moteur de frein, le coin 126 est inséré entre les rouleaux 128. Le mouvement du coin provoque l'écartement de ces rouleaux 128 qui exercent une poussée sur le piston 124 vers la gauche de la figure 3. Le piston 124 par l'intermédiaire de son prolongement 131 sollicite également vers la gauche l'écrou 132 au travers de la liaison filetée 210, 212. L'écrou 132, au travers de la liaison filetée 214, 216, sollicite la vis 134 et donc le poussoir 136 qui, lui, agit sur l'élément de friction (non représenté) pour provoquer un engagement de friction entre ledit élément et un disque à freiner. Si le mouvement de translation vers la gauche de l'écrou 132 est d'amplitude faible, les saillies 150 de l'anneau 154 ne sollicitent pas les gorges hélicoïdales 146 de la vis 218, du fait du jeu existant entre lesdites saillies et lesdites gorges. Si l'amplitude du mouvement de l'écrou 132 devient plus importante, l'anneau de travail 154 provoque la rotation de la vis 218 du fait des gorges hélicoïdales 146, la vis 218 étant libre de tourner dans ce sens du fait de l'embrayage unidirectionnel 156. Au relâchement du freinage l'embrayage unidirectionnel 156 interdisant la rotation de la vis 218, l'anneau de travail 154 provoquera la rotation de l'écrou 132, après rattrapage des jeux, et provoquera le réglage automatique, à savoir l'allongement du mécanisme à vis-écrou 132-134. De même que dans le mode de réalisation précédent, le moteur de frein est équipé d'un dispositif automatique de mise hors-service 168 de l'embrayage unidirectionnel 156, si l'effort de rotation de l'écrou 132 est supérieur à une valeur prédéterminée. Si l'écrou 132 présente un effort résistant à la rotation, l'anneau de travail 154 sollicite la vis 218 en rotation et axialement vers la droite de la figure 3. Ces efforts s'exerçant à l'encontre de la friction et du ressort 174 permettent la rotation forcée l'une par rapport à l'autre des deux surfaces tronconiques 170 et 172, autorisant ainsi la rotation de la vis 218 et mettant ainsi momentanément hors-service l'embrayage unidirectionnel 156. Lorsque ces efforts diminuent, l'engagement de friction entre les deux surfaces tronconiques l'une sur l'autre ré-augmente et l'anneau de travail 154 peut faire tourner l'écrou 132 provoquant ainsi un réglage partiel du frein.

Cette caractéristique est très importante dans le cadre d'un frein à disque, dans lequel les mouvements du piston peuvent se décomposer en trois parties, la première correspondant à l'approche des patins du disque, la deuxième correspondant éventuellement au rattrapage d'usure de ces patins et enfin, la troisième correspondant à la déformation de l'étrier du frein du fait des efforts très importants exercés sur celui-ci. La garantie du recul suffisant du piston après relâchement du frein pour éviter un surréglage est donné par le jeu entre les saillies 150 de l'anneau de travail 154 et les gorges hélicoïdales 146 de la vis 218, ceci à condition que le frein n'ait pas été réglé précédemment. Pour éviter un éventuel surréglage, dû, comme expliqué précédemment à la déformation de l'étrier, le ressort 174 est taré de manière à ce que le réglage ne puisse intervenir tant que l'étrier exerce sur le poussoir 136 un effort de restitution de sa déformation. Lorsque l'étrier n'est plus sous contrainte, alors le réglage automatique intervient pour rattraper l'éventuelle usure des éléments de friction. On voit ainsi que, grâce à la structure de l'embrayage unidirectionnel associé à un dispositif de mise hors-service de celui-ci, les surréglages dus aux déformations mécaniques du frein ne peuvent intervenir.

De même que le premier mode de réalisation, le moteur de frein des figures 3 et 4 comporte un dispositif de remise à zéro, on introduit un tourne-vis dans la fente de la tête 184 et on pousse ce tourne-vis et la tête dans le sens de la flèche K à l'encontre du ressort 192. Ce déplacement de la tête et de la tige 180 provoque l'engrènement de la denture 188 portée par la tige 180 sur la denture 198 portée par la pièce annulaire 230. En tournant le tourne-vis et donc la tige 180, on force la vis 218 à tourner à l'encontre des frottements entre les deux surfaces troncôniques 170 et 172. La rotation de la vis 218 entraîne la rotation de l'écrou 132 et par voie de conséquence, provoque le déplacement vers la droite de la vis 134 et du poussoir 136 effectuant ainsi un retour total ou partiel du réglage automatique vers une position rétractée. En relâchant le tourne-vis, le ressort 192 dégage la tige 180 et, plus précisément, la denture 188 de la denture 198 et maintient le dispositif de remise à zéro dans une position rétractée non opérante.

Le montage du ressort 174 décrit précédemment, à savoir en appui, d'une part sur la coupelle 228 solidaire du piston 124 au travers du prolongement 131, et d'autre part sur la pièce fixe 206 au travers de l'embrayage unidirectionnel et des surfaces troncôniques 170 et 172 assure le rappel vers la droite du piston 124 et du prolongement 131 lorsque la mise en œuvre du moteur de frein a cessé, permettant ainsi de réaliser, au repos, un jeu entre patin et disque.

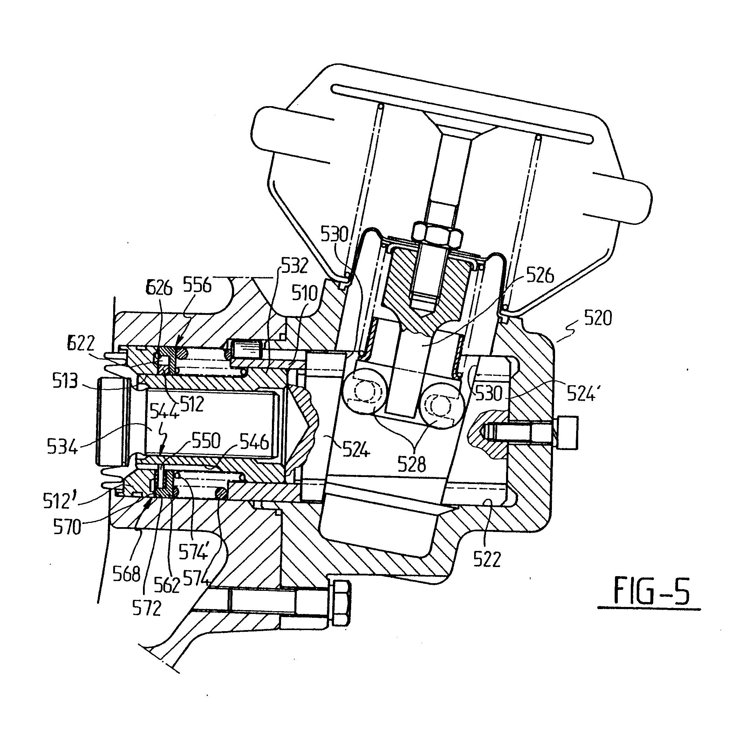

On a représenté sur la figure 5 un troisième mode de réalisation, également appliqué à un moteur de frein à disque. Comme dans l'agencement des figures 3 et 4, on retrouve le coin 526 et ses deux galets 528 en engagement avec les deux surfaces obliques 530 formées respectivement sur une pièce stationnaire 524' solidaire du fond du corps 520, et à l'extrémité d'un piston 524 coulissant dans un alésage 522 du corps 520 et reçu dans une fente d'un manchon formant cage 510. Le piston 524 coopère en engagement de poussée avec un mécanisme à vis 534 et écrou 532 pour l'actionnement d'un élément de friction adjacent (non représenté), suivant un agencement général analogue à celui décrit en relation avec les figures 1 et 2, le piston 524 sollicitant directement en poussée l'écrou tubulaire 532 reçu à coulissement dans l'extrémité du manchon 510 opposé à la pièce 524'. L'écrou 524 comporte, à sa périphérie, au moins une gorge hélicoïdale 546 dans laquelle est reçu un pion ou prolongement interne radial 550 d'une pièce annulaire 512 entourant l'écrou 532 et constituant ainsi, avec ce dernier, le dispositif à vis-écrou à pas réversible désigné dans son ensemble par la référence 544. La pièce annulaire 512 est couplée au cours 520 au travers d'un embrayage unidirectionnel désigné dans son ensemble par la référence 556, et constitué, comme dans le mode de réalisation des figures 3 et 4, par des rouleaux de coincement 622 disposés entre des surfaces de rampes formées à la périphérie de la pièce 512 et une surface cylindrique intérieure 626 formée dans une pièce annulaire 562 à section transversale en forme de L entourant l'écrou 532 et dans laquelle est reçue la pièce annulaire 512. L'ensemble des deux pièces 512 et 532 est maintenu plaqué par deux ressorts de compression coaxiaux 574 et 574' contre une pièce d'appui annulaire 512' monté dans le corps 520 et ayant un alésage central 513 dans lequel est reçu à coulissement l'extrémité de l'écrou tubulaire 532 opposée au piston 524. La face axiale interne de la pièce d'appui 512' forme surface d'appui en friction 570 pour la face axiale correspondante 572 de la pièce 562 constituant ainsi, avec les ressorts 574 et 574' un dispositif 568 d'échappement ou de mise hors-service automatique de l'embrayage unidirectionnel 556. Le ressort extérieur 574, de plus forte raideur, est disposé entre la partie radialement extérieure de la pièce 562 et l'extrémité adjacente du manchon 510, sollicitant ainsi celui-ci axialement contre le fond du corps 520, le ressort intérieur 574', de raideur moindre, étant disposé entre la partie radialement intérieure de la pièce 562 et un épaulement de l'écrou tubulaire 532, sollicitant ainsi ce dernier axialement contre le piston 524.

Le fonctionnement du dispositif de la figure 5 est en tout point analogue à celui décrit en relation avec les modes de réalisation précédents. Sous l'effet des ressorts 574 et 574' et du contact sous pression avec friction entre les faces 570 et 572, la pièce 562, formant cage extérieure de l'embrayage unidirectionnel 556, est normalement maintenue stationnaire. Si toutefois, — en phase de rattrapage de jeu — le couple nécessaire pour une rotation de l'écrou 532 est trop important, en raison d'un effort axial exercé sur la vis 534, il apparaît une rotation forcée, à l'encontre des ressorts 574 et 574', des deux surfaces 570 et 572 l'une par rapport à l'autre, autorisant ainsi une rotation simultanée des pièces 512 et 562 en inhibant la fonction de l'embrayage unidirectionnel 556. Comme dans les modes de réalisation précédents, le moteur de frein peut être pourvu d'un dispositif de remise à zéro (non représenté) comprenant une mollette actionnable de l'extérieur et susceptible d'engréner avec une denture formée sur la face avant de la pièce 512.

On voit à la lumière de la description qui précède des différents modes de réalisation, que le dispositif est simple et donc d'une fiabilité accrue, sans risque de détérioration du fait d'efforts importants emmagasinés lors des freinages, et que ces structures se prêtent tout particulièrement à l'utilisation de dispositifs de remise à zéro qui sont toujours accessibles, même si les éléments de friction, segments pour le premier mode de réalisation et patins de frein pour les second et troisième modes de réalisation, ne sont pas, eux, accessibles du fait de la présence soit du tambour, soit par exemple de la roue.

**Revendications**

1. Moteur de frein à réglage automatique du type comportant un mécanisme d'actionnement à vis-écrou (32, 34-132, 134-532, 534) dont l'allongement est commandé par un système combiné à vis-écrou à pas réversible (44-144-544) et embrayage unidirectionnel (56-156-556) sensible au déplacement axial relatif entre un piston de commande (24-124-524) et un corps fixe (20-120-520) recevant ledit piston de commande, caractérisé en ce que l'embrayage unidirectionnel (56-156-556) comporte un dispositif automatique de mise hors-service (68-168-568) commandé par l'embrayage unidirectionnel (56-156-556) lorsque le couple de mise en rotation dudit mécanisme à vis-écrou (32, 34-132, 134-532, 534) excède une valeur prédéterminée, le dispositif automatique de mise hors-service (68-168-568) comportant deux surfaces (70, 72-170, 172-570, 572) en vis-à-vis, normalement sollicitées en contact de friction l'une contre l'autre, l'une (70-170-570) de ces surfaces étant solidaire du corps (20-120-520), l'autre (72-172-572) de ces surfaces étant solidaire dudit embrayage unidirectionnel (56-156-556).

2. Moteur de frein selon la revendication 1, caractérisé en ce qu'au moins un ressort (74-174-574, 574') sollicite les deux dites surfaces (70, 72-170, 172-570, 572) l'une contre l'autre en engagement de friction, définissant ainsi ladite valeur prédéterminée au-delà de laquelle les deux surfaces sont susceptibles de mouvement relatif de rotation de l'une par rapport à l'autre.

3. Moteur de frein selon la revendication 2, caractérisé en ce que ledit ressort (74-174-574, 574') est un ressort de compression sollicitant une pièce (62-162-562) de l'embrayage unidirectionnel (56-156-556) portant l'autre (72-172-572) desdites surfaces.

4. Moteur de frein selon la revendication 3, caractérisé en ce que ledit ressort (74-574) prend appui sur une partie fixe (76-510) par rapport audit corps (20-520).

5. Moteur de frein selon l'une des revendications 1 à 4, caractérisé en ce que lesdites surfaces (70, 72-170, 172) sont tronçoniques et coaxiales.

6. Moteur de frein selon l'une des revendications 1 à 5, caractérisé en ce que le dispositif à vis-écrou à pas réversible (44-544) comporte un anneau de commande (54-512) présentant, d'une part, sur son diamètre intérieur au moins une saillie (50-550) pénétrant dans une gorge hélicoïdale (46-546) formée sur la périphérie de l'écrou (32-532) du mécanisme vis-écrou (32, 34-532, 534) formant ainsi écrou du dispositif vis-écrou à pas réversible (44-544).

7. Moteur de frein selon l'une des revendications précédentes, caractérisé en ce que l'embrayage unidirectionnel (56) comporte des dentures frontales (58) dissymétriques coopérant avec des dentures (60) dissymétriques frontales portées par ladite pièce (62) de l'embrayage unidirectionnel (56).

8. Moteur de frein selon la revendication 7, caractérisé en ce qu'un ressort d'engrènement (64) de compression placé entre une partie (66) du corps fixe et ledit anneau de commande (54) sollicite en permanence les deux dentures (58, 60) l'une vers l'autre.

9. Moteur de frein selon la revendication 7 ou la revendication 8, caractérisé en ce que le mécanisme à vis-écrou (32, 34), le dispositif à vis-écrou à pas réversible (44), les surfaces tronçoniques (70, 72), les dentures (58, 60) et les ressorts (74, 64) sont tous coaxiaux et coaxiaux audit piston (24).

10. Moteur de frein selon l'une des revendications 1 à 6, caractérisé en ce que l'embrayage unidirectionnel (156-556) comporte des surfaces de rampes (220) à coincement de rouleaux (222-522) formées sur l'un (218-532) des composants du dispositif à vis-écrou à pas réversible (144-544), des rouleaux (222) et des ressorts (224) sollicitant ces derniers en engagement de coincement entre lesdites rampes (220) et une partie cylindrique (226-526) solidaire de ladite pièce (162-562) de l'embrayage unidirectionnel (156-556).

11. Moteur de frein selon la revendication 10, caractérisé en ce que ledit ressort (174) prend appui sur une coupelle (228) solidaire dudit piston (124, 131).

12. Moteur de frein selon l'une des revendications 10 ou 11, caractérisé en ce que l'écrou (132) du mécanisme à vis-écrou (132, 134) a un filetage intérieur (214) coopérant avec une vis (134, 216), formée sur un poussoir (136) et un filetage extérieur (212), coopérant avec un filetage intérieur (210), formé sur une pièce (131) solidaire dudit piston (124), l'écrou (132) comportant de plus un anneau de travail (154) solidaire dudit écrou et présentant des saillies (150) sur son diamètre intérieur, qui pénètrent dans des gorges hélicoïdales (146) formées sur la vis à pas réversible (218) du dispositif vis-écrou à pas réversible (144), ledit anneau de travail (154) formant ledit écrou du dispositif vis-écrou (144).

13. Moteur de frein selon l'une des revendications précédentes, caractérisé en ce qu'il comporte un dispositif de remise à zéro manuel (78-178) du mécanisme à vis-écrou (32, 34-132, 134) du réglage automatique (42-142) permettant la rotation de l'écrou (32-132) du mécanisme à vis-écrou (32, 34-132, 134) à l'encontre de la friction définie par l'engagement de friction desdites deux surfaces (70, 72-170, 172).

14. Moteur de frein selon la revendication 13, caractérisé en ce que le dispositif de remise à zéro (78-178) comporte une tige (80-180) munie, à une (82-182) de ses extrémités, d'une tête de manœuvre (84-184) et, à l'autre extrémité (86-186), d'une denture (88-188) susceptible d'être engagée dans une autre denture (98-198) à l'encontre d'un ressort de rappel (92-192), ladite autre denture (98-198) coopérant avec l'écrou (32-132) du système à vis-écrou.

15. Moteur de frein selon la revendication 14, caractérisé en ce que ladite autre denture (98) est portée par ledit anneau de commande (54).

16. Moteur de frein selon la revendication 14, caractérisé en ce que ladite autre denture (198) est portée par une pièce annulaire (154) solidaire de la vis (218) du dispositif à vis-écrou (144).

17. Moteur de frein selon la revendication 15, caractérisé en ce que l'axe de la tige (80) est perpendiculaire à l'axe dudit piston (24).

18. Moteur de frein selon la revendication 16, caractérisé en ce que l'axe de la tige (180) est parallèle à l'axe dudit piston (124).

**Claims**

1. Automatic adjustment brake motor of the type comprising a screw nut actuating mechanism (32, 34-132, 134-532, 534) the extension of which is controlled by a combined system including a reversible screw nut device (44-144-544) and a unidirectional clutch (56-156-556) responsive to relative axial displacement between a control piston (24-124-524) and a fixed body (20-120-520) received said control piston, characterized in that the unidirectional clutch (56-156-556) comprises an automatic out-of-operation-putting device (68-168-568) actuated by the unidirectional clutch (56-156-556) when the torque of rotation of said screw nut mechanism (32, 34-132, 134-532, 534) exceeds a predetermined value, the automatic out-of-operation-putting device (68-168-568) comprising a pair of surfaces (70, 72-170, 172-570, 572) facing each other and normally urged into frictional contact one against the other, the one (70-170-570) of these surfaces being fixed to the body (20-120-520) and the other (72-172-572) of these surfaces being fixed to said unidirectional clutch (56-156-556).

2. Brake motor according to claim 1, characterized in that at least one spring (75-174-574, 574') biases said pair of surfaces (70, 72-170, 172-570, 572) one against the other into frictional engagement thus defining said predetermined value beyond which the two surfaces are adapted to perform a relative rotation one with respect to the other.

3. Brake motor according to claim 2, characterized in that said spring (74-174-574, 574') is a compression spring biasing a member (62-162-562) of the unidirectional clutch (56-156-556) supporting the other (72-172-572) of said surfaces.

4. Brake motor according to claim 3, characterized in that said spring (74-574) is supported against a portion (76-510) fixed with respect to said body (20-520).

5. Brake motor according to any of claims 1 to 4, characterized in that said surfaces (70, 72-170, 172) are truncated and coaxial.

6. Brake motor according to any of claims 1 to 5, characterized in that the reversible screw nut device (44-544) comprises an annular control member (54-512) presenting at its internal diameter, on the one side, at least one projection (50-550) engaging into a helical groove (46-546) formed at the periphery of the nut (32-532) of the screw nut mechanism (32, 34-532, 534) thereby to form the nut of the reversible screw nut device (44-544).

7. Brake motor according to any of the preceding claims, characterized in that the unidirectional clutch (56) comprises asymmetric frontal teeth (58) cooperating with asymmetric frontal teeth (60) carried by said member (62) of the unidirectional clutch (56).

8. Brake motor according to claim 7, characterized in that a compression spring (64) disposed between a portion (66) of the fixed body and said annular actuating member (54) permanently biases the teeth (58, 60) towards each other.

9. Brake motor according to claim 7 or claim 8, characterized in that the screw nut mechanism (32, 34), the reversible screw nut device (44), the truncated surfaces (70, 72), the teeth (58, 60) and the springs (74, 64) are all coaxial and coaxial to said piston (24).

10. Brake motor according to any of claims 1 to 6, characterized in that the unidirectional clutch (156-556) comprises ramp surfaces (220) for locking rollers (222-522) formed on one (218-532) of the parts of the reversible screw nut device (144-455), rollers (222) and springs (224) urging the latter into locking engagement between said ramps (220) and a cylindrical portion (226-526) of said member (162-562) of the unidirectional clutch (156-556).

11. Brake motor according to claim 10, characterized in that said spring (174) is supported against a washer (228) fixed to said piston (124-131).

12. Brake motor according to claim 10 or claim 11, characterized in that the nut (132) of the screw nut mechanism (132, 134) has internal threads (214) cooperating with a screw (134, 216) formed on a push-rod (136), and external threads (212) cooperating with internal threads (210) formed on a member (131) fixed to said piston (124), the nut (132) further comprising an annular work member (154) fixed to said nut and presenting projections (150) at its internal diameter, which engage into helical grooves (146) formed on the reversible screw (218) of the reversible screw nut device (144), said annular work member (154) forming said nut of the screw nut device (144).

13. Brake motor according to any of the preceding claims, characterized in that it comprises a manual device (78-178) for zero resetting of the screw nut mechanism (32, 34-132, 134) of the automatic adjustment (42-142) allowing for rotation of the nut (32-132) of the screw nut mechanism (32, 34-132-134) against the friction defined by the frictional engagement of said two surfaces (70, 72-170, 172).

14. Brake motor according to claim 13, characterized in that the zero resetting device (78-178) comprises a rod (80-180) provided at one (82-182) of its extremities with a manipulation head (84-184) and at its other extremity (86-186) with a toothing (88-188) adapted to engage an other toothing (98-198) opposite to a return spring (92-192), said other toothing (98-198) cooperating with the nut (32-132) of the screw nut mechanism.

15. Brake motor according to claim 14, characterized in that said other toothing (98) is carried by said annular actuating member (54).

16. Brake motor according to claim 14, characterized in that said other toothing (198) is carried by an annular member (154) fixed to the screw (218) of the screw nut device (144).

17. Brake motor according to claim 15, characterized in that the axis of the rod (80) is perpendicular to the axis of said piston (24).

18. Brake motor according to claim 16, characterized in that the axis of the rod (180) is parallel to the axis of said piston (124).

## Patentansprüche

1. Bremsmotor mit selbstätiger Nachstellung, mit einem Schraub-Betätigungsmechanismus (32, 34-132, 134, 534), dessen Ausfahrbewegung von einer kombinierten Anordnung aus einer reversiblen Schraubvorrichtung (44-144-544) und einer Einwegkupplung (56-156-556) gesteuert wird, die auf eine Axialverschiebung zwischen einem Steuerkolben (24-124-524) und einem den Steuerkolben aufnehmenden festgelegten Gehäuse (20-120-520) anspricht, dadurch gekennzeichnet, daß die Einwegkupplung (56-156-556) eine Vorrichtung (68-168-568) zum selbsttätigen Außerbetriebsetzen aufweist, die von der Einwegkupplung (56-156-556) gesteuert wird, wenn das Drehmoment des Schraubmechanismus (32, 34-132, 134-532, 534) einen vorgegebenen Wert überschreitet, wobei die Vorrichtung (68-168-568) zum selbsttätigen Außerbetriebsetzen zwei gegenüberliegende Flächen (70, 72-170, 172-570, 572) aufweist, die normalerweise in Reibanlage gegeneinandergedrückt werden, wobei die eine (70-170-570) dieser Fläche am Gehäuse (20-120-520) und die andere (72-172-572) an der Einwegkupplung (56-156-556) vorgesehen ist.

2. Bremsmotor nach Anspruch 1, dadurch gekennzeichnet, daß zumindest eine Feder (74-174-574, 574') die beiden Flächen (70, 72-170, 172-570, 572) gegeneinander in Reibanlage drückt, wodurch der besagte vorgegebene Wert definiert wird, bei dessen Überschreiten die beiden Flächen sich relativ zueinander drehen können.

3. Bremsmotor nach Anspruch 2, dadurch gekennzeichnet, daß die Feder (74-174-574, 574') eine Druckfeder ist, die ein die andere Fläche (72-172-572) tragendes Teil (62-162-562) der Einwegkupplung (56-156-556) vorspannt.

4. Bremsmotor nach Anspruch 3, dadurch gekennzeichnet, daß die Feder (74-574) an einem bezüglich des Gehäuses (20-520) festgelegten Teil (76-510) abgestützt ist.

5. Bremsmotor nach einem der Ansprüche 1-4, dadurch gekennzeichnet, daß die besagten Flächen (70, 72-170, 172) kegelstumpfförmig ausgebildet sind und koaxial verlaufen.

6. Bremsmotor nach einem der Ansprüche 1-5, dadurch gekennzeichnet, daß die reversible Schraubvorrichtung (44-544) einen Steuerring (54-512) aufweist, der auf einer Seite an seinem Innendurchmesser mindest einen Vorsprung (50-550) aufweist, der in eine wendelförmige Nut (46-546) vorsteht, die am Umfang der Mutter (32-532) des Schraubmechanismus (32, 34-532, 534) gebildet ist und somit die Mutter der reversiblen Schraubvorrichtung (44-544) bildet.

7. Bremsmotor nach einem der vorhergehenden Ansprüche, dadurch gekennzeichnet, daß die Einwegkupplung (56) eine asymmetrische Stirnverzahnung (58) aufweist, die mit einer asymmetrischen Stirnverzahnung (60) zusammenwirkt, welche von dem besagten Teil (62) der Einwegkupplung (56) getragen wird.

8. Bremsmotor nach Anspruch 7, dadurch gekennzeichnet, daß eine Druckfeder (64), die zwischen einem Teil (66) des Gehäuses und dem Steuerring (54) angeordnet ist, die beiden Verzahnungen (58, 60) permanent gegeneinanderdrückt.

9. Bremsmotor nach Anspruch 7 oder 8, dadurch gekennzeichnet, daß der Schraubmechanismus (32, 34), die reversible Schraubvorrichtung (44), die kegelstumpfförmigen Flächen (70, 72), die Verzahnungen (58, 60) und die Federn (74, 64) sämtlich koaxial und koaxial zum Kolben (24) sind.

10. Bremsmotor nach einem der Ansprüche 1-6, dadurch gekennzeichnet, daß die Einwegkupplung (156-556) versehen ist mit Klemmrollen (222-522)-Schrägflächen (220), die an einem Teil (218-532) der reversiblen Schraubvorrichtung (144-544) gebildet sind, Rollen (222) und Federn (224), die die letzteren in Klemmanlage zwischen die Schrägflächen (220) und einen zylindrischen Abschnitt (226-526) des besagten Teiles (162-562) der Einwegkupplung (156-556) drücken.

11. Bremsmotor nach Anspruch 10, dadurch gekennzeichnet, daß die Feder (174) an einer Scheibe (228) des Kolbens (124, 131) abgestützt ist.

12. Bremsmotor nach Anspruch 10 oder 11, dadurch gekennzeichnet, daß die Mutter (132) des Schraubmechanismus (132, 134) versehen ist mit einem Innengewinde (214), das mit einer an einem Stößel (136) gebildeten Schraube (134, 216) zusammenwirkt, und mit einem Außengewinde (212), das mit einem Innengewinde (210) zusammenwirkt, welches an einem Teil (131) des Kolbens (124) gebildet ist, wobei die Mutter (132) ferner einen Arbeitsring (154) aufweist, der mit der Mutter fest verbunden ist und an seinem Innendurchmesser Vorsprünge (150) aufweist, welche in wendelförmige Nuten (146) an der reversiblen Schraube (218) der reversiblen Schraubvorrichtung (144) vorstehen, wobei der Arbeitsring (154) die Mutter der Schraubvorrichtung (144) bildet.

13. Bremsmotor nach einem der vorhergehenden Ansprüche, dadurch gekennzeichnet, daß er eine manuell betätigbare Vorrichtung (78-178) zur Nullrückstellung des Schraubmechanismus (32, 34-132, 134) zur selbsttätigen Nachstellung (42-142) aufweist, welche eine Drehung der Mutter (32-132) des Schraubmechanismus (32, 34-132, 134) entgegen der Reibung erlaubt, welche durch die Reibanlage zwischen den besagten beiden Flächen (70, 72-170, 172) entsteht.

14. Bremsmotor nach Anspruch 13, dadurch gekennzeichnet, daß die Vorrichtung (78, 178) zur Nullrückstellung eine Stange (80-180) aufweist, die an ihrem einen Ende (72-182) mit einem Betätigungskopf (84-184) und an ihrem anderen Ende (86-186) mit einer Verzahnung (88-188) versehen ist, welche mit einer anderen Verzahnung (98-198) entgegen einer Rückholfeder (92-192) in Eingriff treten kann, wobei diese andere Verzahnung (98-198) mit der Mutter (32-132) des Schraubmechanismus zusammenwirkt.

15. Bremsmotor nach Anspruch 14, dadurch gekennzeichnet, daß die besagte andere Verzahnung (98) von dem Steuerring (54) getragen wird.

16. Bremsmotor nach Anspruch 14, dadurch gekennzeichnet, daß die besagte andere Verzahnung (198) von einem Ringteil (154) getragen wird, das mit der Schraube (218) der Schraubvorrichtung (144) fest verbunden ist.

17. Bremsmotor nach Anspruch 15, dadurch gekennzeichnet, daß die Achse der Stange (80) senkrecht zur Achse des Kolbens (24) verläuft.

18. Bremsmotor nach Anspruch 16, dadurch gekennzeichnet, daß die Achse der Stange (180) parallel zur Achse des Kolbens (124) verläuft.

FIG_1

FIG_2

FIG_3

FIG_4

FIG-5

0 145 535